# FASCICULE DE BREVET EUROPEEN

(11) **EP 0 694 007 B1**
(45) Date de publication et mention de la délivrance du brevet: **02.07.1997**
(21) Numéro de dépôt: 94913666.7
(22) Date de dépôt: 19.04.1994
(51) Int. Cl.: B62D 53/00

(54) **VEHICULE FORME D'UNE SUITE DE MODULES RELIES ENTRE EUX PAR UNE LIAISON COMPOSITE ARTICULEE**
AUS MEHREREN MODULEN ZUSAMMENGESTELLTES UND DURCH EINE ZUSAMMENGESETZTE VERBINDUNG GEKOPPELTES FAHRZEUG
VEHICLE MADE UP OF A SERIES OF MODULES INTERCONNECTED VIA A COMPOSITE ARTICULATED CONNECTION ASSEMBLY

(30) Priorité: 19.04.1993 FR 9304731
(43) Date de publication de la demande: 31.01.1996
(73) Titulaire: LOHR INDUSTRIE, 67980 Hangenbieten (FR)
(72) Inventeur: PICARD, Antoine, F-49300 Cholet (FR)
(74) Mandataire: Metz, Paul
(86) Numéro de dépôt international: FR9400440
(87) Numéro de publication internationale: WO9423985

(56) Documents cités:
- EP-A- 0 519 813
- FR-A- 2 549 436
- US-A- 4 235 451
- US-A- 5 052 707

## Description

L'invention se rapporte à un véhicule articulé du type défini dans le préambule de la revendication 1 et connu par exemple du document FR-A-2 549 436.

Le développement des transports sur route, notamment le transport de marchandises et les transports de personnes en milieu urbain ou semi-urbain, a entraîné le besoin de véhicules de grande capacité de chargement et d'accueil.

Cependant, ces véhicules doivent également répondre aux impératifs légaux, notamment dimensionnels, ainsi qu'à des contraintes de maniabilité adaptées à leur usage.

La composition en plusieurs modules interconnectés et articulés formant une rame présente d'importants avantages, notamment en ce qui concerne la longueur totale obtenue avec des modules identiques ou différents de longueur réduite, mais aussi le confort de conduite, en particulier dans les courbes.

Ceci est particulièrement vrai pour les transports urbains devant suivre parfois un tracé de voies de circulation souvent étroit et tortueux, comportant courbes horizontales et verticales.

Cependant, la réalisation en modules articulés présente des difficultés de conception et de réalisation, ces difficultés augmentant avec le nombre de modules.

La position relative des trains de roues en ligne droite comme en virage doit être contrôlée, afin d'éviter des déports ou écarts de trajectoire, des glissements, des phénomènes d'oscillations ou de rabattement de certains modules, notamment les modules intermédiaires, ou le module terminal.

Un autre problème est lié aux irrégularités de la voie, par exemple bosses, dévers, enfoncements localisés. La position relative des modules doit également être contrôlée dans ce type de mouvement entre les modules.

A cet effet, on connaît différents dispositifs de contrôle des positions relatives des modules d'un véhicule modulaire et de ses trains de roues. Mais les dispositifs mettant en oeuvre des vérins ou une gestion automatisée, par exemple électronique, sont onéreux et compliqués.

Il existe des dispositifs simplement mécaniques ou à géométrie variable, par exemple celui décrit dans le brevet US n° 5052707 au nom de Timan qui se rapporte à un dispositif à bras articulés pour le contrôle de la position d'un module intermédiaire d'intercirculation entre les deux autres parties d'un véhicule articulé.

Mais ce dispositif comprenant plusieurs parallélogrammes déformables placés en position supérieure s'avère notablement encombrant. De plus, il nécessite que la structure d'extrémité d'un au moins des éléments modulaires soit asymétrique, avec pour conséquence une aptitude réduite à la modularité et des complications de réalisation.

Par ailleurs, la publication EP-A-0 519 813 au nom de GEC ALSTHOM décrit un dispositif de liaison pour véhicule articulé au niveau du passage d'intercirculation, constitué par des bielles obliques reliées par des éléments de liaison, formant un parallélogramme déformable en partie supérieure.

Ce dispositif ne prévoit de contrôle de position du passage d'intercirculation que dans un type de mouvement, celui résultant des courbes horizontales. Sa fonction principale se limite à assurer un centrage de la partie supérieure de l'élément intermédiaire entre les deux voitures.

On connaît par ailleurs par le brevet français n° 2 549 436 un type d'articulation entre deux modules d'un même véhicule articulé formé de plusieurs modules dont un module de tête à train avant directeur et un module de queue à train arrière.

Les modules sont reliés entre eux par l'intermédiaire d'une liaison composite articulée formée d'un support mobile d'articulation et portée par un essieu. Ce support mobile d'articulation est relié à chacun des modules par un ensemble d'articulations à trois degrés de liberté dont au moins deux sont en position médiane sur chacun des côtés transversaux d'extrémité en regard de chaque module. Une articulation à déplacement limité est associée à chacun des groupes des articulations à trois degrés de façon à constituer une liaison articulée double ou multiple entre le support mobile d'articulation et un des modules adjacents.

Le but de l'invention est de remédier à ces inconvénients en proposant un véhicule articulé de façon mécanique simple, permettant d'assurer un meilleur maintien relatif en position des modules le composant, un suivi des courbes et des irrégularités de la voie quasi parfait, ainsi qu'une limitation sensible des mouvements parasites des modules entre eux, ceci même pour des rames routières composées de deux modules ou plus.

A cet effet, l'invention consiste en un véhicule articulé tel que défini dans la revendication 1.

L'invention présente de nombreux avantages, au niveau simplicité de construction, coût de revient, fiabilité, efficacité, performance.

Elle se montre particulièrement bien adaptée au transport en commun de voyageurs en milieu urbain, car elle permet la circulation de véhicules de grande longueur sans diminution de la maniabilité.

Notamment, l'invention assure une amélioration sensible du comportement en tangage et en roulis.

Ce dispositif d'articulation permet de rendre l'ensemble du véhicule quasi isostatique, ce qui diminue notablement les efforts dynamiques supportés par les structures.

Les dispositions constructives de la présente invention permettent d'obtenir une liaison articulée entre les modules plus simple et moins coûteuse que celle décrite dans le brevet FR A-2 549 436. En effet, cette dernière procède du principe d'une liaison d'articulation contrôlée d'une longueur variable nécessitant l'utilisation de nombreux vérins et de nombreuses articulations dont au moins six dans la version simplifiée.

Les vérins sont associés à deux articulations à déplacement limité et la liaison articulée nécessite deux vérins supplémentaires pour contrôler la trajectoire de l'ensemble lors d'un changement de direction.

A l'inverse, la présente invention permet de n'utiliser que des liaisons rigides.

D'autres caractéristiques techniques et avantages de l'invention apparaîtront dans la description qui suit, donnée à titre d'exemple et accompagnée des dessins dans lesquels :
- la figure 1 est une vue générale schématique en perspective d'un véhicule articulé à trois modules ne faisant ressortir que les organes intéressant l'invention ;
- la figure 2 est une vue identique à celle de la figure 1 représentant une variante de réalisation à deux modules ;
- la figure 3 est une vue schématique en plan du véhicule en position alignée des modules ;
- la figure 4 est une vue schématique en plan du véhicule en début de virage horizontal ;
- la figure 5 est une vue schématique en plan du véhicule en cours de virage ;
- la figure 6 est une vue schématique en plan du véhicule dans un virage en S ;
- les figures 7, 8 et 9 sont des vues schématiques de détail de dessus d'une liaison composite entre deux modules respectivement en ligne droite, en virage léger et en virage prononcé ;

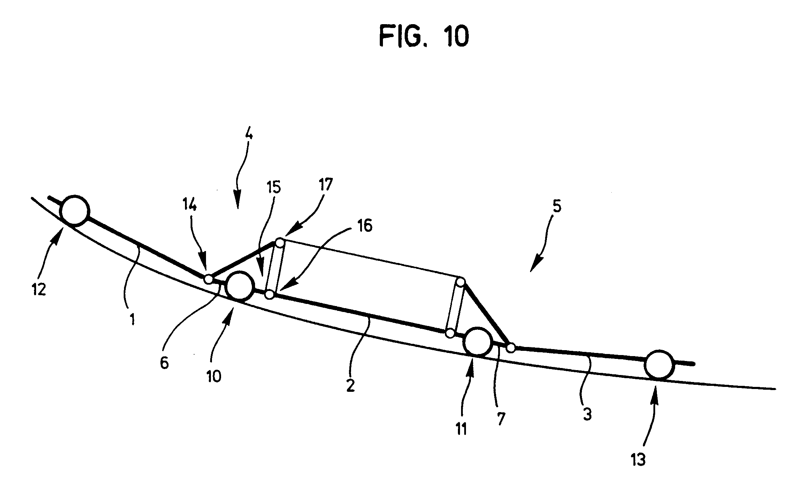

- la figure 10 est une vue schématique de profil du véhicule dans une courbe verticale.

L'idée générale inventive consiste à relier les modules d'un véhicule articulé par des liaisons composites articulées formées chacune d'un support mobile d'articulation porté par un essieu et d'une liaison complémentaire par bielle oblique, chaque support mobile d'articulation étant relié à l'un des modules par une liaison à trois degrés de liberté et à l'autre module par une liaison articulée double dont l'articulation inférieure est une articulation à trois degrés de liberté et l'articulation supérieure une articulation, par exemple élastique, à déplacement contrôlé.

Ainsi, chaque support d'articulation est relié de façon articulée d'une part à l'un des modules adjacents par une articulation du type rotule et d'autre part à l'autre module adjacent par une articulation double constituant un pivot inversé à mouvement pendulaire d'amplitude limitée.

Selon la variante préférée, chacun ou l'un au moins, ou l'un sur deux, des supports mobiles d'articulation est porté par un essieu moteur. Toute la force de propulsion du véhicule provient alors uniquement selon cette variante des essieux moteurs portant les supports mobiles d'articulation.

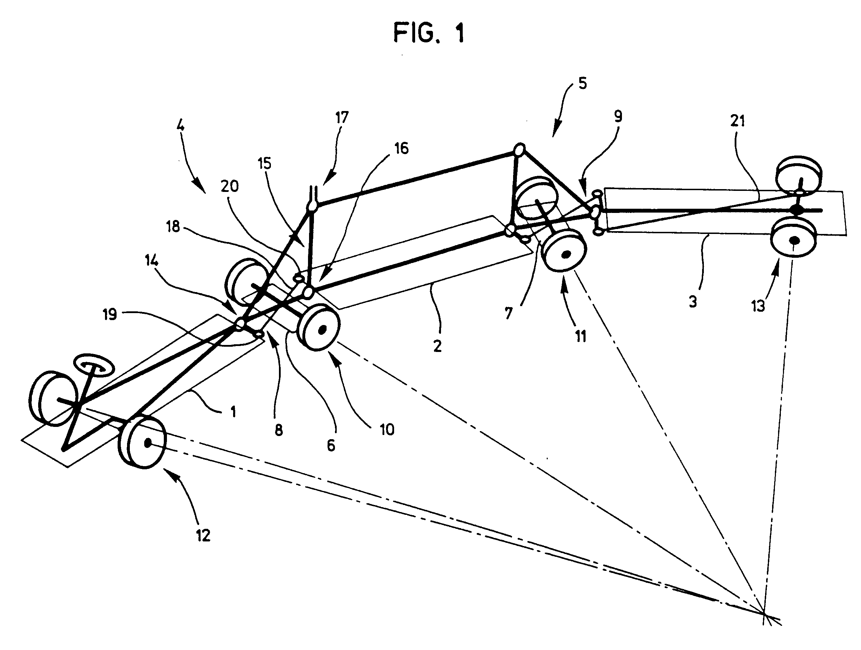

Un exemple de véhicule articulé à trois modules selon l'invention est représenté sur la figure 1.

Il constitue la version de base de l'invention qui s'étend aussi bien à un véhicule de deux modules qu'aux véhicules de plus de trois modules.

Il se compose d'un module de tête 1, d'un module intermédiaire 2 et d'un module de queue 3. Ces modules sont reliés entre eux de façon articulée par des liaisons composites doubles telles que 4 ou 5, formées d'une part d'un support mobile d'articulation 6 ou 7 et d'autre part d'une liaison oblique articulée 8 ou 9.

Chaque support mobile d'articulation 6 ou 7 est porté par un essieu ou un train de roues 10 ou 11 à direction fixe par rapport au corps du support mobile d'articulation.

Le module de tête 1 est muni d'un train de roues directeur à l'avant 12, et le module de queue 3 comporte un train de roues 13 fixe ou suiveur à l'arrière. Ce train de roues peut être orientable, comme représenté, par un asservissement à la position du support mobile d'articulation adjacent par l'intermédiaire d'une liaison articulée spécifique de renvoi.

Ce train arrière peut également être fixe dans le cas d'une variante simplifiée.

Les liaisons articulées 4 ou 5 entre les modules sont similaires, et il en serait également ainsi si le véhicule comportait un nombre plus élevé de modules. Pour cette raison, on se contentera de décrire la liaison composite articulée 4 existant entre le module de tête 1 et le module intermédiaire 2.

Le support mobile d'articulation avant 6, pris comme exemple, est relié au module de tête 1 selon une présentation dite avant-arrière par une articulation unique de liaison avant 14 à trois degrés de liberté, par exemple du type à rotule ou à cardan, et au module suivant, ici le module intermédiaire 2, par une liaison articulée double arrière 15, réalisant la fonction générale d'un pivot vertical inversé oscillant, c'est-à-dire libre en débattements pendulaires. Cette articulation double arrière 15 est constituée d'une articulation inférieure 16 du type à rotule ou à cardan à axe principal horizontal et d'une articulation supérieure élastique 17 à déplacement contrôlé, destinée à reprendre tous les efforts dus aux mouvements de roulis et de tangage et la composition de ceux-ci.

Ce pivot présente donc un débattement d'oscillation permettant d'absorber les amplitudes des mouvements de roulage liés aux variations de forme de la route et aux mouvements des caisses des modules.

D'autre part, le support mobile d'articulation est doublé de la liaison articulée oblique sous la forme d'une bielle oblique d'asservissement 18, articulée par une de ses extrémités 19 sur le châssis du module précédent, et par son autre extrémité 20 sur le châssis du module suivant, en deux points de leurs extrémités en vis-à-vis décalés symétriquement par rapport à l'axe longitudinal central commun des modules successifs lorsqu'ils sont alignés. La bielle oblique d'asservissement 18 est montée sur les extrémités des châssis par des articulations omnidirectionnelles, par exemple du type à rotule ou à la cardan.

Les liaisons articulées ci-dessus forment un ensemble d'articulations disposées en triangle comme représenté sur les figures. Sur ces figures, les sommets des triangles sont situés du côté du module intermédiaire 2. Il est bien entendu que l'invention ne dépend nullement de ce type de configuration, mais au contraire s'étend indifféremment à toutes les deux possibilités d'orientation de ce triangle, à savoir sommet articulé sur le module avant ou sommet articulé sur le module suivant.

En particulier, la liaison articulée double 15 peut exister à l'avant de chaque module suivant, y compris le module de queue.

Comme on peut le constater sur les premières figures, les supports mobiles d'articulation avant 6 et arrière 7 réalisent l'équivalent d'une liaison à la cardan ou d'une bielle rotulée si l'on fait abstraction des débattements de roulis et de tangage. Ainsi, deux modules successifs sont reliés par une liaison articulée se présentant comme l'équivalent de deux bielles croisées.

Comme représenté à titre d'exemple sur la figure 1, une liaison articulée double 15 réalisant la fonction de pivot pendulaire inversé est utilisée à chacune des extrémités du module intermédiaire 2 pour le véhicule à trois modules articulés, et ceci de façon inversée. En effet, le support mobile d'articulation avant 6 présente l'articulation unique 14 vers l'avant et la liaison articulée double 15 vers l'arrière, alors que le support mobile d'articulation arrière 7 présente une orientation inverse.

Bien qu'utilisée à titre illustratif, cette disposition ne présente aucun caractère obligatoire.

De cette façon, la présente invention permet de réaliser un ensemble articulé à cinq éléments, trois modules et deux supports mobiles d'articulation, qui est théoriquement le parfait équivalent d'un ensemble isostatique articulé à trois éléments.

De façon non obligatoire, on peut prévoir à l'extrémité supérieure faisant face à l'articulation inférieure unique 14 une liaison d'amortissement, constituée par exemple de deux amortisseurs disposés en V.

Dans une courbe verticale se développant longitudinalement, par exemple un début de pente, ou un tangage, le pivotement relatif s'effectue entre le module précédent ou suivant et le support mobile d'articulation adjacent par l'articulation unique 14 à rotule.

Les mouvements de roulis sont absorbés par les articulations inférieures et l'articulation supérieure des supports mobiles d'articulation.

Les mouvements d'oscillation de chaque module intermédiaire sont repris par au moins une articulation élastique 17 à déplacement contrôlé disposée en partie supérieure.

L'association de cette articulation élastique 17 en partie supérieure et de l'articulation 16 du type à rotule lui faisant face en partie inférieure permet que les efforts principaux de charge et les efforts verticaux d'accélération ainsi que ceux de traction et de freinage soient transmis par l'intermédiaire de la liaison inférieure. L'articulation du type pivot entre le module et le support mobile est libre en pivotement dans un plan horizontal, les autres mouvements secondaires sont contrôlés par la liaison élastique supérieure destinée à reprendre les efforts liés au roulis et au tangage.

Dans la réalisation avec essieu arrière orientable du train 13, celui-ci est monté à pivotement sur le module de queue 3. Son asservissement est constitué par une liaison articulée, par exemple une bielle oblique 21 reliée de façon articulée par deux articulations, l'une sur l'essieu du train 13 de roues arrière, l'autre sur le support mobile d'articulation arrière 7, ces deux points d'articulation étant décalés symétriquement par rapport à un axe longitudinal commun lorsque les modules sont alignés. La bielle est montée à ses extrémités par une articulation à trois degrés de liberté de type rotule.

Bien entendu, d'autres moyens de commande du train directionnel arrière peuvent être prévus. De même, celui-ci peut tout aussi bien être du type essieu pivotant que du type à roues braquées comme celui du train avant.

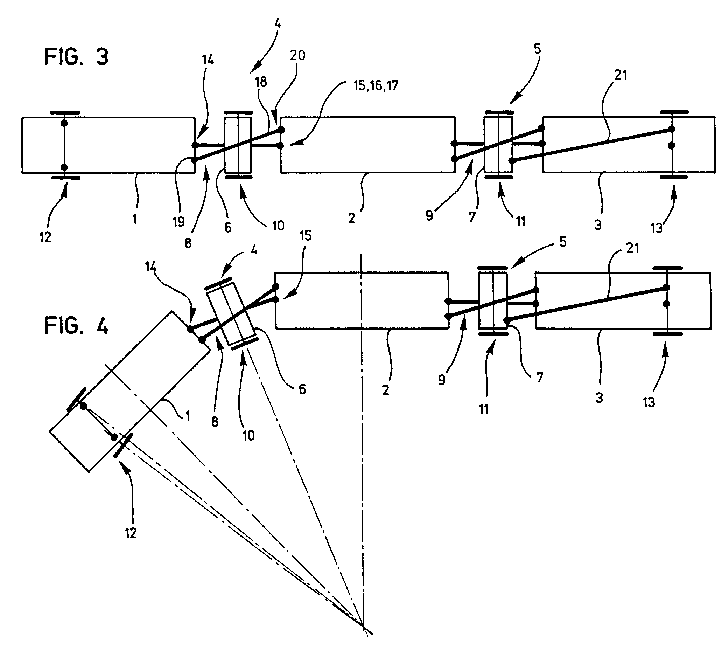

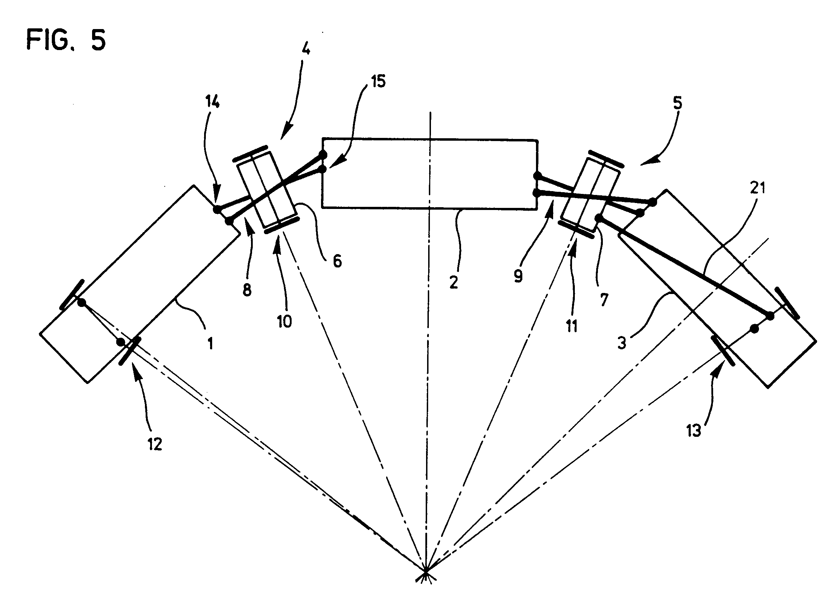

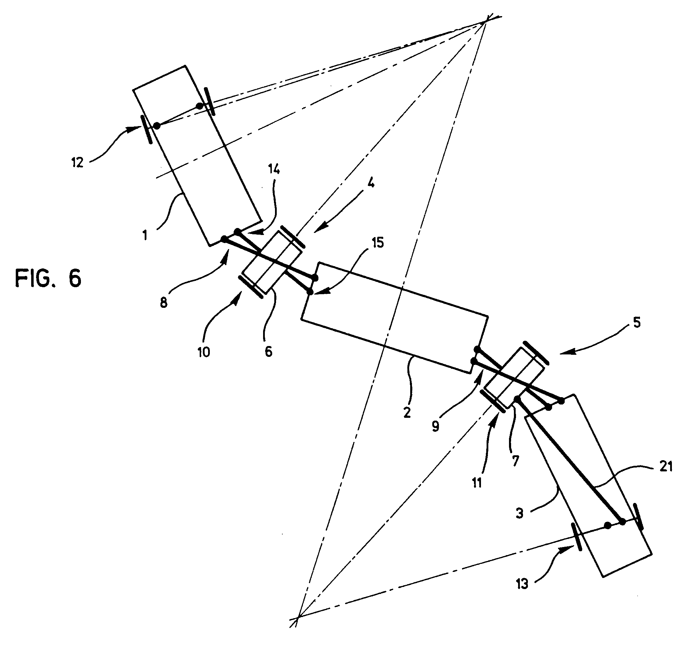

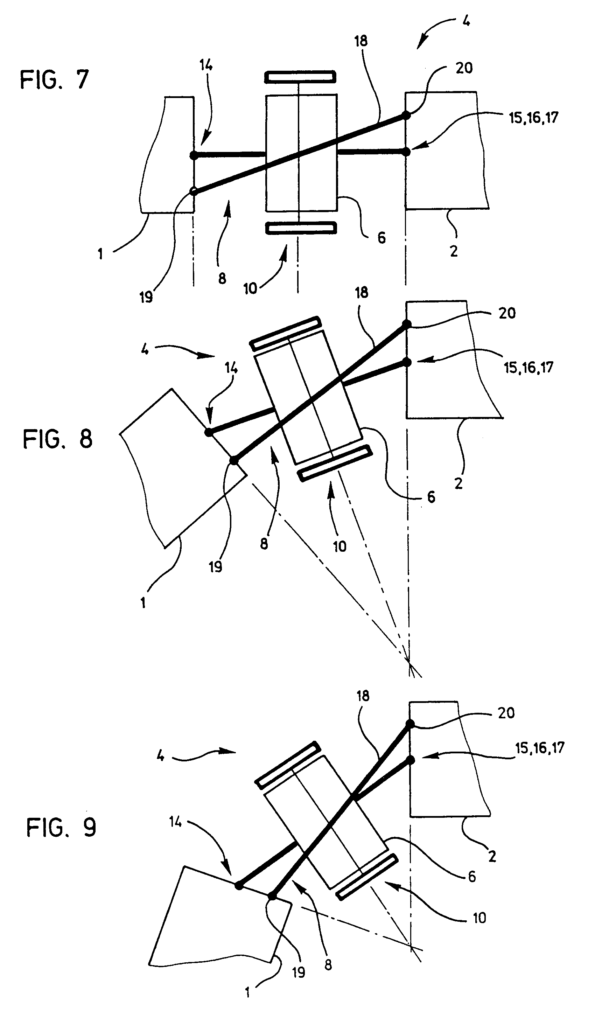

Les figures 3 à 8 représentent les positions relatives des supports mobiles d'articulation et des modules dans différentes configurations susceptibles de se présenter sur une voie de circulation.

Ces figures illustrent clairement les possibilités du véhicule concernant le suivi de trajectoire, correspondant à la conception modulaire et aux liaisons articulées selon l'invention. La trajectoire de chaque module suit très précisément la trajectoire du module précédent.

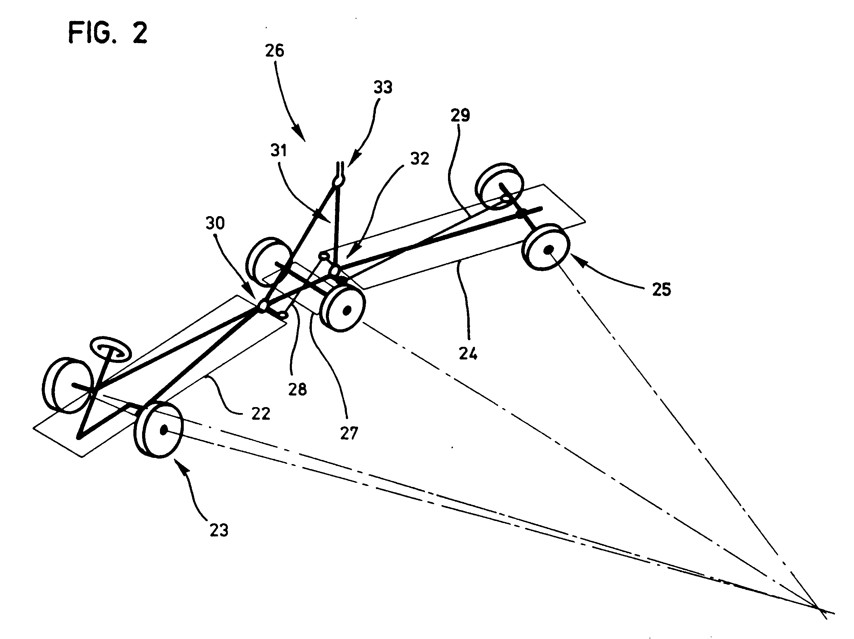

Bien entendu, l'invention décrite pour un véhicule articulé à trois modules est applicable pour un nombre plus élevé de modules, ou bien pour un véhicule comportant seulement deux modules comme représenté sur la figure 2.

Le module avant 22 comporte un train avant directeur 23, et le module arrière 24 un train arrière orientable 25, comme décrit plus haut de façon générale.

Ces modules sont reliés par une liaison articulée composite unique 26 mettant en oeuvre un support unique mobile d'articulation 27 du type de celui décrit plus haut, et une liaison articulée oblique sous la forme d'une bielle oblique 28. La bielle d'asservissement 29 de l'articulation du train arrière orientable 25 est reliée à ce support mobile unique d'articulation 27.

Le support mobile d'articulation unique 27 est relié au module avant 22 par une liaison unique de type rotule 30, et au module arrière 24 par une liaison articulée double 31, formée d'une articulation inférieure de type rotule 32 et d'une articulation supérieure 33 élastique à déplacement contrôlé.

On obtient ainsi l'équivalent d'un véhicule à deux modules isostatiques, sauf pour les pivotements dans un plan horizontal.

## Revendications

1. Véhicule articulé formé d'une pluralité de modules reliés entre eux de façon articulée, composé d'un module de tête (1) à train avant directeur (12), d'un module de queue (3) à train arrière (13), et éventuellement de modules intermédiaires (2), ces modules étant reliés entre eux par l'intermédiaire d'une liaison composite articulée constituée d'un support mobile d'articulation (6) porté par un essieu (10, 11), support mobile d'articulation (6) relié à chacun des modules adjacents par une articulation (14, 16) à trois degrés de liberté située chacune en position médiane sur chacun des côtés transversaux d'extrémité en regard de chaque module, une articulation à déplacement limité étant associée à une articulation à trois degrés de liberté de façon à former une liaison articulée double entre le support mobile d'articulation (6) et un module adjacent caractérisé en ce que la liaison composite articulée comporte en outre une liaison oblique articulée (8, 9) s'étendant entre les modules, en ce qu'il n'existe une liaison articulée double (15) qu'entre le support mobile d'articulation (6) et un seul des modules adjacents, et en ce que l'articulation à déplacement limité constitue l'articulation supérieure (17) alors que les articulations à trois degrés de liberté (14, 16) qui lui sont associées constituent chacune une articulation inférieure.

2. Véhicule selon la revendication 1 caractérisé en ce que les liaisons composites articulées sont orientées de façon que la liaison articulée double (15) existe à chacune des extrémités d'un module intermédiaire (2).

3. Véhicule selon la revendication 1 caractérisé en ce que la liaison articulée double (15) existe à l'avant de chaque module suivant.

4. Véhicule selon les revendications 1 ou 2 ou 3 caractérisé en ce que l'essieu d'au moins un support mobile d'articulation (6, 7) est moteur.

5. Véhicule selon l'une des revendications précédentes, caractérisé en ce que le train arrière (13) du module de queue (3) est orientable et asservi de façon que son axe médian transversal et celui de l'essieu (11) du module adjacent passent par le centre instantané de rotation.

6. Véhicule selon la revendication 5 caractérisé en ce que le train arrière (13) orientable du module de queue (3) est asservi à la position du support mobile d'articulation (7) précédent.

7. Véhicule selon la revendication 1, caractérisé en ce que la liaison articulée oblique (18) existant entre deux modules successifs est rigide sous la forme d'une bielle de liaison montée articulée par ses extrémités (19, 20) sur chacun des châssis des modules en des points décalés symétriquement par rapport à l'axe médian longitudinal des modules alignés.

8. Véhicule selon les revendications 1, 6 et 7 caractérisé en ce que le train arrière (13) est asservi à la position du support mobile d'articulation arrière (7) par l'intermédiaire d'une bielle oblique d'asservissement (21) montée articulée par ses extrémités en des points décalés symétriquement par rapport à l'axe médian longitudinal des modules alignés, d'une part sur le train arrière (13), et d'autre part sur le support mobile d'articulation arrière (7).

9. Véhicule selon les revendications 7 et 8, caractérisé en ce que les bielles sont montées articulées par l'intermédiaire d'articulations à trois degrés de liberté présentes à chacune de leurs extrémités.

10. Véhicule selon l'une des revendications précédentes, caractérisé en ce que les articulations à trois degrés de liberté sont des articulations de type à rotule.

11. Véhicule selon l'une quelconque des revendications précédentes, caractérisé en ce que les articulations à trois degrés de liberté sont des articulations de type à la cardan.

12. Véhicule selon l'une quelconque des revendications précédentes, caractérisé en ce qu'il comporte deux modules reliés par un seul support mobile d'articulation.

## Claims

1. Articulated vehicle formed by a plurality of modules interconnected in an articulated manner, composed of a head module (1) with a front steering wheel and axle set (12), a tail module (3) with a rear wheel and axle set (13), and possibly intermediate modules (2), these modules being interconnected by means of a composite articulated connection constituted by a movable articulation support (6) carried by an axle (10, 11), the movable articulation support (6) being connected to each of the adjacent modules by an articulation (14, 16) with three degrees of freedom, each articulation being situated in a central position on each of the facing transverse ends of each module, an articulation with limited displacement being associated with an articulation with three degrees of freedom in a manner such as to form a double articulated connection between the movable articulation support (6) and an adjacent module, characterized in that the composite articulated connection also includes an oblique articulated connection (8, 9) extending between the modules, in that there is a double articulated connection (15) between the movable articulation support (6) and only one of the adjacent modules, and in that the articulation with limited displacement constitutes the upper articulation (17) whereas each of the articulations (14, 16) with three degrees of freedom which are associated therewith constitutes a lower articulation.

2. Vehicle according to Claim 1, characterized in that the composite articulated connections are oriented in a manner such that the double articulated connection (15) exists at each of the ends of an intermediate module (2).

3. Vehicle according to Claim 1, characterized in that the double articulated connection (15) exists at the front of each following module.

4. Vehicle according to any one of Claims 1, 2 or 3, characterized in that the axle of at least one movable articulation support (6, 7) is a driving axle.

5. Vehicle according to any one of the preceding claims, characterized in that the rear wheel and axle set (13) of the tail module (3) is orientable and is controlled in a manner such that its transverse median axis and that of the axle (11) of the adjacent module pass through the instantaneous centre of rotation.

6. Vehicle according to Claim 5, characterized in that the orientable rear wheel and axle set (13) of the tail module (3) is controlled by the position of the preceding movable articulation support (7).

7. Vehicle according to Claim 1, characterized in that the oblique articulated connection (18) existing between two successive modules is rigid in the form of a connecting rod articulated at its ends (19, 20) to the chassis of each module at points offset symmetrically relative to the longitudinal median axis of the aligned modules.

8. Vehicle according to Claims 1, 6 and 7, characterized in that the rear wheel and axle set (13) is controlled by the position of the rear movable articulation support (7) by means of an oblique control connecting rod (21) articulated by its ends at points offset symmetrically relative to the longitudinal median axis of the aligned modules, on the one hand, on the rear wheel and axle set (13) and, on the other hand, on the rear movable articulation support (7).

9. Vehicle according to Claims 7 and 8, characterized in that the connecting rods are articulated by means of articulations with three degrees of freedom, present at each of their ends.

10. Vehicle according to any one of the preceding claims, characterized in that the articulations with three degrees of freedom are swivel joints.

11. Vehicle according to any one of the preceding claims, characterized in that the articulations with three degrees of freedom are universal joints.

12. Vehicle according to any one of the preceding claims, characterized in that it includes two modules connected by a single movable articulation support.

## Patentansprüche

1. Gelenkfahrzeug mit einer Mehrzahl von untereinander gelenkig verbundenen Gliedern, bestehend aus einem Kopfglied (1) mit lenkbarem Frontfahrgestell (12), einem Endglied (3) mit Heckfahrgestell (13) und gegebenenfalls Zwischengliedern (2), die untereinander durch eine Zusammengesetzte Gelenkkette verbunden sind, bestehend aus je einem beweglichen von einer Achse (10, 11) getragenen Gelenkträger (6) zwischen je zwei benachbarten Gliedern mit einem Gelenk (14, 16) mit drei Freiheitsgraden, das sich jeweils in einer Mittelposition an jeder der endständigen Querseiten bezüglich jedes Gliedes befindet, wobei ein Gelenk mit begrenzter Beweglichkeit mit einem Gelenk mit drei Freiheitsgraden verbunden ist derart, daß eine Doppel-Gelenkverbindung zwischen dem beweglichen Gelenkträger (6) und einem benachbarten Glied entsteht, dadurch gekennzeichnet, daß die Gelenkkette darüberhinaus einen sich zwischen den Gliedern erstreckenden Schräglenker (8, 9) aufweist, daß eine Doppel-Gelenkverbindung nur zwischen dem beweglichen Gelenkträger (6) und nur einem der benachbarten Glieder vorhanden ist, und daß das Gelenk mit begrenzter Beweglichkeit das obere Gelenk (17) bildet, während die mit ihm verbundenen Gelenke mit den drei Freiheitsgraden (14, 16) jeweils ein unteres Gelenk bilden.

2. Fahrzeug nach Anspruch 1, dadurch gekennzeichnet, daß die Gelenkketten so angeordnet sind, daß die Doppel-Gelenkverbindungen (15) an den beiden Enden eines Zwischengliedes (2) angeordnet sind.

3. Fahrzeug nach Anspruch 1, dadurch gekennzeichnet, daß die Doppel-Gelenkverbindung (15) an der Frontseite jedes folgenden Gliedes angeordnet ist.

4. Fahrzeug nach einem der Ansprüche 1 bis 3, dadurch gekennzeichnet, daß die Achse zumindest eines beweglichen Gelenkträgers (6, 7) angetrieben ist.

5. Fahrzeug nach einem der Ansprüche 1 bis 4, dadurch gekennzeichnet, daß das Heckfahrgestell (13) des Endgliedes (3) so einstellbar und steuerbar ist, daß dessen mittlere Querachse und die der Achse (11) des benachbarten Gliedes durch das momentane Drehzentrum laufen.

6. Fahrzeug nach Anspruch 5, dadurch gekennzeichnt, daß das einstellbare Heckfahrgestell (13) des Endgliedes (3) durch die Lage des davor angeordneten beweglichen Gelenkträgers (7) gesteuert ist.

7. Fahrzeug nach Anspruch 1, dadurch gekennzeichnet, daß der Schräglenker (18) zwischen zwei einander folgenden Gliedern starr ist in Form einer Verbindungsstange, die mit ihren Enden (19, 20) an zur Längsachse der fluchtenden Glieder symmetrisch versetzten Punkten an dem Chassis der Glieder angelenkt ist.

8. Fahrzeug nach Anspruch 1, 6 oder 7, dadurch gekennzeichnet, daß das Heckfahrgestell (13) auf die Lage des hinteren beweglichen Gelenkträgers (7) über eine schräge Steuerstange (21) einstellbar ist, die mit ihren Enden an zur Längsachse der fluchtenden Glieder symmetrisch versetzten Punkten einerseits am Heckfahrgestell (13), andererseits am hinteren beweglichen Gelenkträger (7) angelenkt ist.

9. Fahrzeug nach Anspruch 7 oder 8, dadurch gekennzeichnet, daß die Stangen über ihren Enden angeordnete Gelenke mit drei Freiheitsgraden angelenkt sind.

10. Fahrzeug nach einem der Ansprüche 1 bis 9, dadurch gekennzeichnet, daß die Gelenke mit drei Freiheitsgraden Kugelgelenke sind.

11. Fahrzeug nach einem der Ansprüche 1 bis 10, dadurch gekennzeichnet, daß die Gelenke mit drei Freiheitsgraden kardanische Gelenke sind.

12. Fahrzeug nach einem der Ansprüche 1 bis 11, dadurch gekennzeichnet, daß es aus zwei Gliedern besteht, die durch einen einzigen beweglichen Gelenkträger verbunden sind.
